# EUROPEAN PATENT APPLICATION

(11) **EP 4 778 751 A1**
(43) Date of publication of application: **22.07.2026**
(21) Application number: 26153188.3
(22) Date of filing: 21.01.2026
(51) Int. Cl.: B60J 7/06

(54) **SLIDING SKID**

(30) Priority: 21.01.2025 IT 202500000963
(71) Applicant: Marcolin Covering S.r.l., 33170 Pordenone (PN) (IT)
(72) Inventor: MARCOLIN, Luca, 33170 Pordenone (PN) (IT); COLUSSI MAS, Massimiliano, 33070 Maron di Brugnera (PN) (IT)
(74) Representative: Gallo, Luca

(57) **Abstract**

A sliding skid is described which can be coupled to a foot of a rib supporting a covering tarpaulin, the rib being movable by a traction rope to slide, for example, on opposite sides of an open-top container, the skid comprising, in use, a foot block formed by a first and second element, that can be assembled to delimit a cavity shaped to accommodate the foot of the spar. To simplify maintenance, the first element comprises a first portion with a first surface and the second element comprises a second portion with a second surface, and the first and second portions can be inserted into each other by sliding relative to each other along an axis X to stably connect the first and second elements, preventing them from detaching thanks to the first surface 56′ abutting against the second surface.

## Description

The present invention relates to a sliding skid mounted at the end of a support rib of a tarpaulin, in particular for covering a container; a support rib equipped with the sliding skid; and a covering system comprising a plurality of such rib ribs.

Covering systems for covering/uncovering a container are known which use a set of ribs to support and spread a tarpaulin over the container. The ribs slide on opposite sides of the container pulled by rope loops, see e.g. EP2321133.

One problem with the system is the speed of repair when a component of the skid block is damaged or wears out. In particular, one component subject to damage is a foot block that forms a tunnel into which the foot of the rib rib is inserted. When the block wears out, breaks or is damaged (e.g. by a bucket during loading manoeuvres), the entire skid and rope drive system must be dismantled. To avoid complicated and laborious replacement, there are currently two-piece blocks joined by screws or bolts, but ease of maintenance is not optimal and could be improved.

The main purpose of the invention is to eliminate or mitigate the problem by creating a different skid of the above type.

Another purpose is to create a skid of the above type with which it is easy and quick to replace the foot block.

A sliding skid is therefore proposed that can be coupled to a foot of a rib supporting a cover tarpaulin,
the rib being movable by a traction rope to slide, for example, on opposite sides of an open-top container,
the skid comprising, in use, a foot block formed by a first and second modular elements to delimit a cavity shaped to accommodate the foot of the rib; wherein
the first element comprises a first portion having a first surface and
the second element comprises a second portion equipped with a second surface, and
the first and second portions can be inserted into each other by sliding relative to each other along an axis to stably connect the first and second elements, preventing them from detaching thanks to the first surface abutting against the second surface.

When the first and second portions are coupled, they constrain the two elements to have a single possible relative movement, i.e. sliding along said axis, without relative rotation. Therefore, any movement tending to detach them is prevented.

Advantageously, the first and second portions are able to make the two elements integral without the aid of other fastening means such as screws or clamps. The assembly and disassembly of the two elements is therefore very quick and simple, as it is sufficient to move them relatively.

In one embodiment, at least one of the first and second portions is mounted movably on the respective element, so that a displacement of the movable portion is sufficient to couple the first and second portions.

In one embodiment, the first and second portions are integral with the first and second elements, respectively, and said relative sliding refers to the first and second elements. That is, a relative movement of the first and second elements is sufficient to achieve coupling between the first and second portions.

In one embodiment, the first and second portions form a prismatic joint. The prismatic joint is a type of mechanical joint that allows relative movement between the first and second portions only along a straight line, while maintaining constraints in every direction orthogonal to that of the straight line (or movement). In other words, the joint allows relative sliding of the two portions along a linear trajectory while preventing any rotational or translational movement in other directions; and the same applies accordingly to the first and second elements when these portions have been coupled.

For this purpose, in one embodiment, the first and second portions are configured to interlock with each other and form said joint.

In one embodiment, one of the first and second portions comprises a groove parallel to the axis and
the other portion includes a longitudinal tenon extending parallel to the axis,
the tenon being slidably housed/housable in the groove and
the section of the groove, viewed in a plane orthogonal to said axis, is substantially complementary to the section of the tenon, viewed in the same orthogonal plane.

In particular, the sections of the groove and the tenon have a narrowing at said relative sliding flat surfaces, in order to prevent detachment between the two elements.

In one embodiment, said axis is parallel to the longitudinal axis of the cavity, so that the translation of the skid, which occurs orthogonally to the longitudinal axis of the cavity, does not induce relative movement between the two elements.

To simplify the construction of the block and the coupling with the foot of the rib, in one embodiment the first element is an upper element of the block and the second element is a lower element of the block; the upper element and the lower element are vertically juxtaposed/juxtaposable in a sandwich configuration to form the cavity.

In one embodiment, the block comprises
on a first side, an opening corresponding to the entrance to the cavity, and
on a second side, opposite the first, a wall that closes the cavity, making it blind.

In one embodiment, the first portion is provided with a projection comprising said first surface and the second portion is provided with a recess defining a seat for receiving the projection, the seat comprising said second surface, or vice versa.

The projection and the recess are dimensioned so that the projection can fit into the seat and oppose the separation of the first and second elements thanks to the abutment and opposition of said surfaces.

In one embodiment, said seat is an undercut formed in the recess.

In one embodiment, said seat is a hole complementary to the projection or a groove, and correspondingly, the projection is a pin or a flange.

In one embodiment, said surfaces are flat and/or lie on planes parallel to each other when the first and second elements are in contact, preferably one above the other.

In one embodiment, the projection is an L-shaped tooth, formed by a first segment and a second segment that are joined at a common end and are orthogonal to each other. In one embodiment, the segments are substantially linear segments.

In one embodiment, the first segment is integral with the first element or the second element, while the second segment projects from the first segment. The length of the first segment is such that it aligns the second segment with said seat or undercut when the first element and the second element are in contact, preferably one above the other.

In one embodiment, the seat or undercut has a shape complementary to the second segment. The seat or undercut is made in such a way as to allow the second segment to enter, either precisely or with a certain tolerance, but so that, once inserted, the second segment remains locked in the cavity of the seat or undercut without play or with negligible play. Then, when the second segment is inserted into the seat or undercut, a surface of the second segment abuts against a surface of the seat or undercut and prevents the separation of the two said elements.

Another aspect of the invention relates to a support rib equipped with a skid according to the invention.

Another aspect of the invention relates to a covering system comprising a plurality of ribs equipped with a skid according to the invention.

Another aspect of the invention relates to an open-top container, e.g. of a vehicle, comprising:
- opposite sides of the container,
- a plurality of rib devices that are
   equipped with two end feet, each foot having a sliding skid attached to it in accordance with the invention, and
   mounted so as to slide on the container with the respective feet on each side,
- a rope loop for pulling the ribs over the container in order to distribute them over the container to cover it or pack them on one side of the container to uncover it.

The advantages of the invention will be further clarified by preferred embodiments described below with reference to the accompanying drawings, in which:
- Figure 1 shows a side view of a covering system;

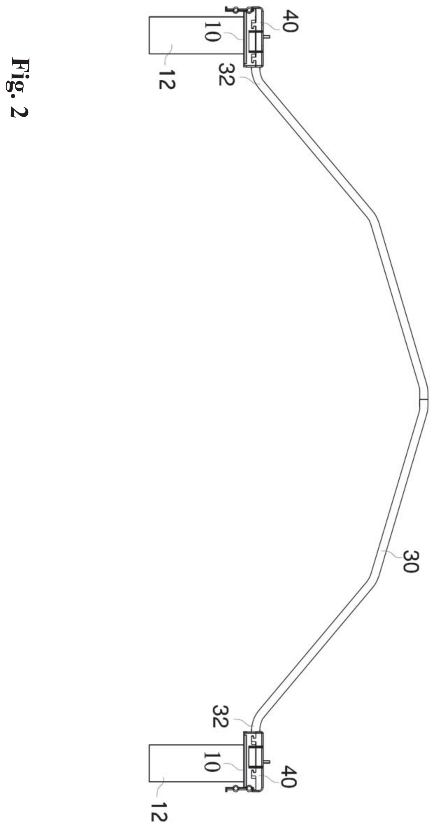

- Figure 2 shows a front view of the system of Figure 1;
- Figure 3 shows a three-dimensional view of a skid for a rib;
- Figure 4 shows the skid in a three-dimensional exploded view.

In the figures, identical numbers indicate identical or conceptually similar parts, and the system is described as in use and preferably mounted on an open-top container.

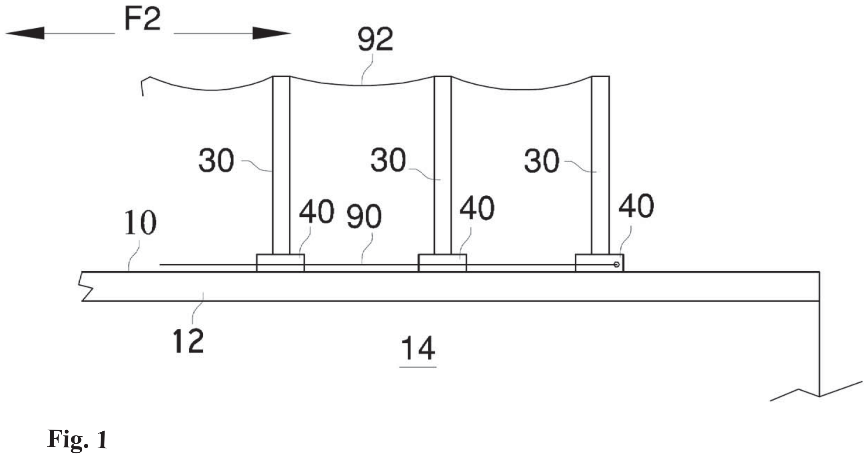

Fig. 1 shows schematically a preferred sliding system in which to apply the sliding skid.

Above opposite edges 10 of sides 12 of a container 14, the ribs 30 can slide horizontally (direction F2 parallel to edges 10) in a known manner by means of a rope loop 90. The ribs 30 support a tarpaulin 92 covering the container 14. By moving the rope loop 92, the container 14 can be covered or uncovered in a known manner by distributing the ribs 30 over the container 14 or by packing them all on one side of the container 14.

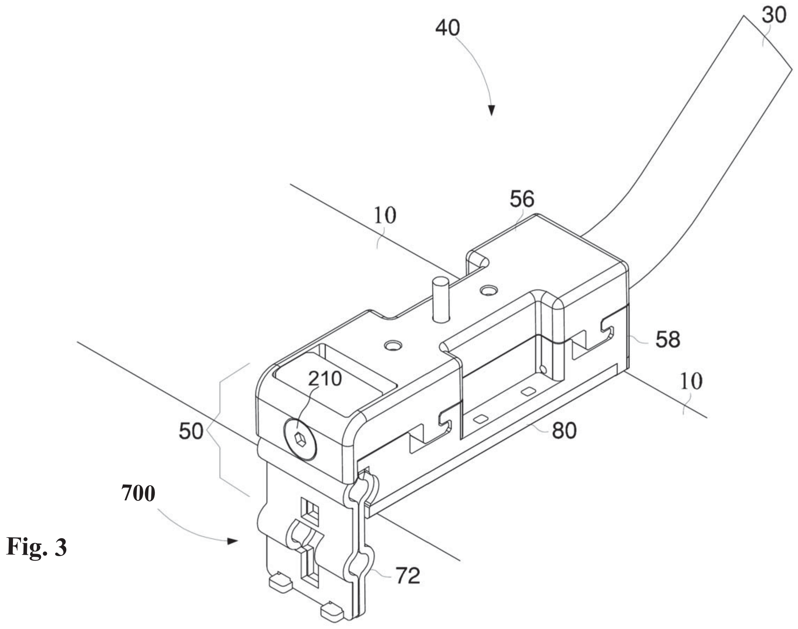

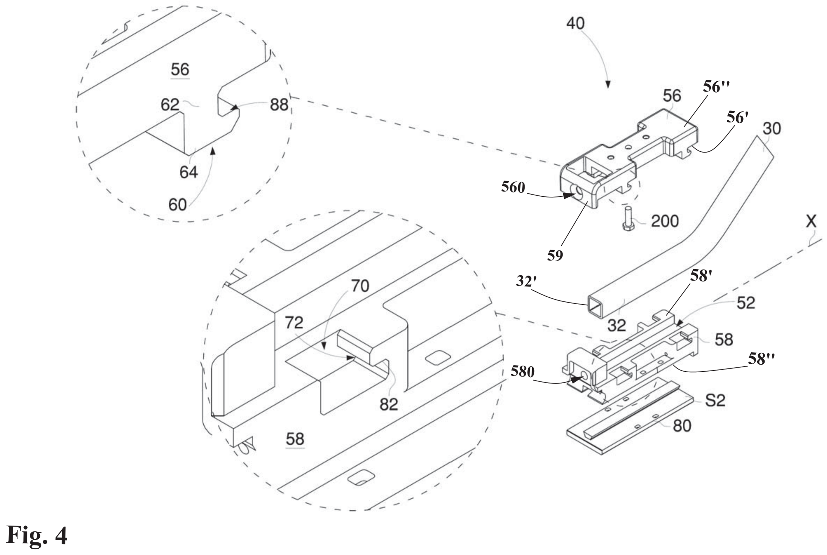

A skid 40 is mounted at each end or foot 32 of each rib 30, as shown in detail in Figs. 3-4.

The skid 40 (Fig. 3) comprises
- a foot block 50 that delimits a cavity 52. The cavity 52 has a longitudinal axis X, is open on one side of the block and is shaped to accommodate the foot 32 in a complementary manner;
- a guiding member 700 connected to the block 50 for coupling to the rope 90; and preferably
- a sliding member 80 mounted under and as a base for the block 50 to slide on the edge 10 with low friction.

In one embodiment, which simplifies the production and creation of cavity 52, the block 50 comprises a first upper element 56 and a second lower element 58 which are vertically juxtaposed to form cavity 52. In particular, the first upper element 56 and the second lower element 58 are arranged with the foot 32 of the rib 30 interposed between them, which is thus clamped between the first upper element 56 and the second lower element 58.

In other words, cavity 52 is defined by both the first upper element 56 and the second lower element 58.

More specifically, the first upper element 56 defines a first semi-cavity, while the second lower element 58 defines a second semi-cavity, which faces the first semi-cavity and delimits the cavity 52 of the block 50 with the latter, when the first upper element 56 is mounted on top of the second lower element 58.

In particular, the first upper element 56 has a first lower face 56', facing the second lower element 58, which is equipped with a first recessed depression, for example U-shaped, which delimits the aforementioned first semi-cavity, while the second lower element 58 has a second upper face 58', facing the first upper element 56, which is equipped with a second recessed depression, for example U-shaped, which delimits the aforementioned second semi-cavity. Preferably, the two semi-cavities are mirror images of each other and symmetrical, and in particular have a comparable thickness (measured along a thickness direction orthogonal to the longitudinal axis X).

In this way, foot 32 of rib 30 is housed inside cavity 52, engaging with its lower portion in the second semi-cavity defined by the second lower element 58, and with its upper portion in the first semi-cavity defined by the first upper element 56.

The first upper element 56 is equipped with a projection 60 and the second lower element 58 is equipped with a recess 70 that defines a seat 72 to receive the projection 60. The projection 60 and the recess 70 are dimensioned so that the projection 60 can fit into the seat 72 and there oppose the separation of the elements 56, 58 thanks to the abutment and opposition of a surface 88, present in the projection 60, against a surface 82 present in the seat 72.

Preferably, the seat 72 is an undercut formed in the recess 70. In other embodiments, it could be a hole complementary to the projection 60 or a groove, and correspondingly, the projection 60 is a pin or a flange.

Advantageously, the first upper element 56 extends (orthogonally to the longitudinal axis X) between a first lower face 56' and a first upper face 56".

Preferably, the projection 60 protrudes downward from the first lower face.

Advantageously, the second lower element 58 extends (orthogonally to the longitudinal axis X) between a second lower face 58" and a second upper face 58'.

Preferably, recess 70 is formed on the second upper face 58', and is therefore specifically directed towards projection 60 of the first upper element 56.

More specifically, the first lower face 56' of the first upper element 56 is counter-faced to the second upper face 58' of the second lower element 58.

Preferably, surfaces 88 and 82 are flat and/or lie on planes parallel to each other when elements 56 and 58 are in contact with each other. In particular, the aforementioned surfaces 88, 82 are parallel to the longitudinal axis X, so as to bind the first upper element 56 to the second upper element 58 along a direction orthogonal to the longitudinal axis X.

In one embodiment, the projection 60 is an L-shaped tooth, formed by a first segment 62 and a second segment 64 that are joined at a common end and are orthogonal to each other. In one embodiment, segments 62, 64 are substantially linear segments. The first segment 62 is integral with the first upper element 56, while the second segment 64 protrudes from the first segment 62.

In particular, the first segment 62 protrudes downward from the first lower face 58' of the first upper element 56, transversely to the longitudinal axis X, while the second segment 64 protrudes rearward with respect to the first segment 62, parallel to the longitudinal axis X.

The length of the first segment 62 is such that it aligns the second segment 64 with the undercut when elements 56 and 58 are in contact with each other.

In one embodiment, the undercut has a shape complementary to the second segment 64. The undercut is made in such a way as to allow the second segment 64 to enter, either precisely or with a certain tolerance, but in such a way that, once inserted, the second segment 64 remains locked in the undercut cavity without play or with negligible play. Then, when the second segment 64 is inserted into the undercut, a surface of the second segment 64 abuts against a surface of the undercut and prevents the separation of the elements 56 58.

In general, the second portion has a geometry adapted to retain the projection 60 or the second segment 64 in a stable position without the possibility of further movement relative to the X-axis.

In particular, the undercut is a cavity with a geometry (e.g., rectangular, trapezoidal, or V-shaped) adapted to maintain and retain the projection 60, or the second segment 64, in a stable position without the possibility of further movement relative to the X-axis.

### OPERATION OF THE SKID

The joint system between the first upper element 56 and the second lower element 58 works as follows:
The first upper element 56 is placed above the second lower element 58, so that the projection 60 is aligned with the recess 70. In particular, the first upper element 56 is juxtaposed with the second lower element 58 by translating it orthogonally to the longitudinal axis X, in order to insert the projection 60 at least partially into the recess 70. Then the projection 60 (or the second segment 64) is pushed along the X axis into the undercut, during which operation a stable interlocking between the two is obtained thanks to the complementary geometry of the projection 60 (or the second segment 64) and the undercut. Once inserted, the projection 60 (or the second segment 64) remains fixed inside the undercut, preventing the two elements 56 58 from detaching. Their fastening can be easily removed with opposite movements and without tools, if necessary.

In one embodiment, the projection 60 is movable relative to the first upper element 56, so that it is sufficient to move the projection 60 relative to the first upper element 56 to achieve coupling with the undercut.

In one embodiment, the projection 60 is integral with the first upper element 56, so that in order to achieve coupling of the projection 60 with the undercut, it is necessary to move the first upper element 56 relative to the second lower element 58.

It is understood that the joining system described between elements 56 and 58 allows for quick assembly of the skid 40 without the need for additional tools or components, reducing assembly time and cost.

In particular, the interlocking between the projection 60 and the undercut ensures a solid connection that is resistant to mechanical forces, although it is easy to separate the elements 56, 58.

In other embodiments, the position of the projection 60 and the recess 70 may be reversed with respect to elements 56, 58.

Preferably, the sandwich position of the attached elements 56, 58 is permanently locked by a fastening mean, e.g. a screw 200 or 210, which prevents relative movement of the projection 60 and the seat 72 and prevents accidental detachment. In one embodiment, the fastening mean is mounted to secure one side of the first upper element 56 against a corresponding side of the second lower element 58.

Preferably, the fastening mean 210 engages along a direction parallel to the longitudinal axis X.

More specifically, the two elements 56, 58 are equipped with respective insertion holes 560, 580 (parallel to the longitudinal axis X) which are made on a side opposite to that where the foot 32 of the rib 30 is to be inserted. In particular, the two insertion holes 560, 580 communicate with the cavity 52, which is therefore advantageously open on both sides, i.e. at the rear at the insertion opening for the foot 32 of the rib 30, and at the front for the insertion of the screw 210.

Advantageously, the aforementioned insertion holes 560, 580 are arranged coaxially and aligned with each other once the block 50 has been assembled, with the first upper element 56 mounted on top of the second lower element 58, and are preferably also coaxial and aligned with an engagement hole made on one end 32' of the foot 32 of the rib 30, so as to allow both the connection of the first upper element 56 to the second lower element 58 (to form the block 50) and also the connection of the foot 32 of the rib 30 to the block 50 thus assembled.

Advantageously, one of the first upper element 56 and the second lower element 58 is equipped at its front end (at which the aforementioned insertion holes are made) with a stop wall 59, which extends vertically transversely to the longitudinal axis and defines a stop surface for the other between the first upper element 56 and the second lower element 58, so as to bind the aforementioned elements 56, 58 once assembled along the longitudinal axis X.

For example, in accordance with the attached figures, the first upper element 56 is equipped with the aforementioned stop wall 59, which extends downwards transversely to the longitudinal axis X, and is preferably equipped with an insertion hole to receive the fastening mean 210.

## Claims

1. Sliding skid that can be coupled to a foot (32) of a rib (30) supporting a covering tarpaulin, the rib (30) being movable by a traction rope to slide, for example, on opposite sides of a container,
the skid (40) comprising, in use, a foot block (50) formed by a first and second element (56, 58) that can be assembled to delimit a cavity (52) shaped to house the foot (32) of the rib (30); wherein
the first element (56) comprises a first portion having a first surface and
the second element (58) comprises a second portion equipped with a second surface, and
the first and second portions can be inserted into each other by sliding them relative to each other along an axis in order to stably connect the first and second elements (56, 58), preventing them from separating thanks to the first surface abutting against the second surface;
wherein said first element (56) is an upper element of the block and said second element (58) is a lower element of the block, and wherein said upper element and said lower element are vertically juxtaposed in a sandwich configuration to form said cavity (52).

2. Skid according to claim 1, wherein at least one of the first and second portions is mounted movably on the respective element, so that a displacement of the movable portion is sufficient to couple the first and second portions.

3. Skid according to claim 1, wherein the first and second portions are integral with the first and second elements (56, 58), respectively, so that a relative displacement of the first and second elements (56, 58) is sufficient to achieve coupling between the first and second portions.

4. A skid according to any of the preceding claims, wherein the first and second portions form a prismatic joint.

5. A skid according to any of the preceding claims, wherein
one of the first and second portions comprises a groove parallel to the axis and
the other portion comprises a longitudinal tenon extending parallel to the axis,
the tenon being slidably housed/housable in the groove and
the section of the groove, viewed in a plane orthogonal to said axis, is substantially complementary to the section of the tenon, viewed in the same orthogonal plane.

6. A skid according to claim 5, wherein the sections of the groove and the tenon have a narrowing at said surfaces to prevent separation between the two elements.

7. A skid according to any of the preceding claims, wherein said axis is parallel to the longitudinal axis of the cavity (52).

8. A skid according to any of the preceding claims, wherein the first portion is provided with a projection (60) comprising said first surface and the second portion is provided with a recess (70) defining a seat (72) for receiving the projection (60), the seat (72) comprising said second surface, or vice versa.

9. Skid according to claim 8, wherein said seat (72) is an undercut formed in the recess (70) and the projection (60) is an L-shaped tooth formed by a first segment and a second segment that are joined at a common end and are orthogonal to each other.
